# EUROPÄISCHE PATENTSCHRIFT

(11) **EP 0 922 172 B1**
(45) Veröffentlichungstag und Bekanntmachung des Hinweises auf die Patenterteilung: **18.08.2004**
(21) Anmeldenummer: 98936236.3
(22) Anmeldetag: 19.06.1998
(51) Int. Cl.: F16J 3/04

(54) **ELASTISCHES DICHTUNGSELEMENT IN BALGFORM**
ELASTIC SEALING ELEMENT IN THE FORM OF A BELLOW
ELEMENT D'ETANCHEITE ELASTIQUE EN FORME DE SOUFFLET

(30) Priorität: 27.06.1997 DE 19727494
(43) Veröffentlichungstag der Anmeldung: 16.06.1999
(73) Patentinhaber: ZF Lemförder Metallwaren AG, 49448 Lemförde (DE)
(72) Erfinder: SOKOLIHS, Dirk, D-49565 Bramsche (DE); PETERSEN, Uwe, D-32339 Espelkamp (DE)
(86) Internationale Anmeldenummer: PCT/DE1998/001695
(87) Internationale Veröffentlichungsnummer: WO 1999/000617

(56) Entgegenhaltungen:
- DE-B- 1 181 014
- FR-A- 2 414 144
- US-A- 3 208 290

## Beschreibung

Die Erfindung betrifft ein elastisches Dichtungselement in Balgform zur Abdichtung der Kontaktfläche zwischen wenigstens zwei zueinander beweglichen Bauteilen entsprechend den Oberbegriffen der Ansprüche 1 und 3.
Dichtungselemente der gattungsgemäßen Art sind beispielsweise aus der DE 196 34 444 A1 bekannt und werden in vielen Bereichen des Maschinenbaus wie zum Beispiel in der Kraftfahrzeugtechnik eingesetzt. Die oben angeführte Schrift offenbart eine Kugelverbindungsanordnung, bei der eine Überdruckablaßvorrichtung vorhanden ist, die in der Art eines Ventils aufgebaut ist. Hierbei wird eine das Innere einer Schmiermittelkammer mit der Außenluft verbindende Öffnung in einem elastischen Dichtungselement durch einen Haltering abgedeckt. Steigt der Druck innerhalb der Schmiermittelkammer infolge Erwärmung des Schmiermittels über einen vorbestimmten Wert, so reichen die Anpreßkräfte des Halteringes nicht mehr aus, die Verbindungsöffnung des Dichtelementes zu verschließen, so dass bei einem entsprechenden Überdruck Schmiermittel zwischen Haltering und Dichtelement austreten kann.
Die Bauform der in der angeführten Schrift offenbarten Überdruckablaßvorrichtung ist insofern nachteilig, dass der zur Abdichtung der Ablaßöffnung notwendige Haltering gegenüber dem Dichtungselement verschieblich ist und außerdem aus Montagegründen geschlitzt ausgeführt sein muß. Aufgrund dieser konstruktionsbedingten Eigenschaften kann es vorkommen, dass der Schlitz des Halteringes genau über der Öffnung zum Ablassen des Überdruckes positioniert ist. Dies führt dazu, dass auch bei normalem Druck in der Schmiermittelkammer Schmiermittel ungehindert nach außen austreten kann bzw. die Möglichkeit besteht, dass Verunreinigungen von außen in die Schmiermittelkammer eindringen können. Darüber hinaus neigen derartige Halteringe dazu, zu ermüden oder beispielsweise durch Korrosion zumindest teilweise in ihrer Funktionsweise eingeschränkt zu werden.

Aus der US 3,208, 290 ist ein elastisches Dichtungselement in Balgform zur Abdichtung der Kontaktfläche zwischen wenigstens zwei zueinander beweglichen Bauteilen mit niedrig elastischen Anlagezonen zur Anlage an den Bauteilen, einer zwischen den Anlagezonen befindlichen, verglichen mit den Anlagezonen, höherelastischen Verformungszone, die an ihrer den beweglichen Bauteilen zugewandten Innenseite eine Kammer zur Aufnahme von Schmiermitteln definiert und eine Überdruckablaßvorrichtung bekannt, wobei die Überdruckablaßvorrichtung im Bereich einer der niedrigelastischen Anlagezonen angeordnet und eine die Schmiermittelkammer mit der Außenseite des Dichtungselementes verbindende Auslaßöffnung vorhanden ist. Ein die Auslaßöffnung abdeckendes Verschlußelement ist einstückig mit dem Dichtungselement ausgeführt und verschließt durch die Eigenelastizität des Dichtungselementmaterials die Auslaßöffnung bis zu einem Grenzüberdruck in der Schmiermittelkammer.
Nachteilig ist bei einer derartigen Dichtelementgestaltung insbesondere, dass die Auslaßöffnung aus einem Schlitz besteht, dessen über seine Lebensdauer nachlassende Elastizität gleichfalls die Dichtheit des Systems bestimmt. Darüber hinaus weist das Dichtelement eine muldenartige Vertiefung auf, in der die Auslaßöffnung angeordnet ist. Innerhalb dieser Vertiefung besteht jedoch die Gefahr, der Ablagerung von Verunreinigungen, deren Eindringen in die schlitzartige Auslaßöffnung somit kaum zu verhindern ist.

Aufgabe der vorliegenden Erfindung ist es daher, ein elastisches Dichtungselement bereitzustellen, dass jederzeit und unter allen Betriebsbedingungen eine zuverlässige Abdichtung gewährleistet, darüber hinaus eine Überdruckablaßvorrichtung aufweist, die jederzeit funktionssicher arbeitet, leicht und kostengünstig herstellbar ist und Sicherheit gegen Montagefehler bietet.

Diese Aufgabe wird durch die kennzeichnenden Merkmale der Ansprüche 1 und 3 gelöst.

Die einstückige Bauweise des Verschlußelementes mit dem Dichtungselement verhindert zuverlässig jegliche Montagefehler, wie sie bei der Konstruktion der oben angeführten Schrift auftreten könnten, da zusätzliche Bauteile der Überdruckablaßvorrichtung des Dichtungselementes nicht vorhanden sind. Darüber hinaus läßt sich die einstückige Bauweise einfach und preiswert herstellen. Spezielle Ausgestaltungen des Gegenstandes der Erfindung ergeben sich aus den Merkmalen der Unteransprüche. Im folgenden wird ein Ausführungsbeispiel des Gegenstandes der Erfindung anhand der beigefügten Zeichnungen näher erläutert. Es zeigen:
- Figur 1: eine vereinfachte Schnittdarstellung des erfindungsgemäßen elastischen Dichtelementes,
- Figur 2: eine vergrößerte Darstellung des Dichtungselementes aus Figur 1 im Bereich der Überdruckablaßvorrichtung.

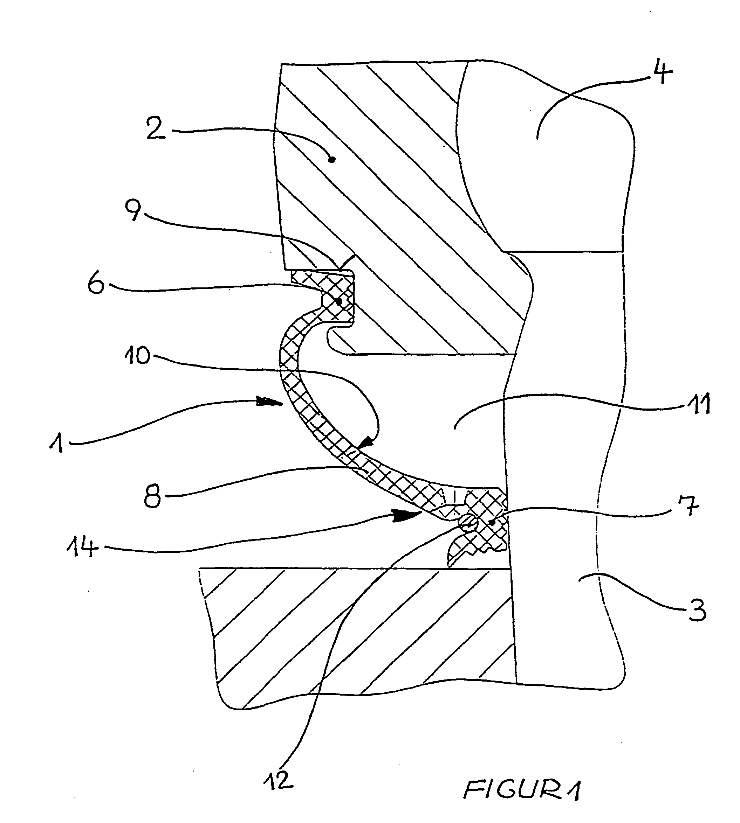

Das erfindungsgemäße mit der Bezugsziffer 1 gekennzeichnete Dichtungselement ist in dem dargestellten Ausführungsbeispiel zur Abdichtung der Kontaktfläche zweier Bauteile 2 und 3 eingesetzt. Beim Bauteil 2 handelt es sich um eine Gelenkpfanne, in die die Gelenkkugel 4 des Bauteiles 3 eingesetzt ist, bei dem es sich vorliegend um einen Gelenkschaft eines Kugelzapfens handelt. Das Dichtungselement 1 besitzt eine Anlagezone 6 an die Gelenkpfanne 2 und eine Anlagezone 7 an den Gelenkschaft 3. Die Anlagezonen 6 und 7 sind an ihrer Verbindungsfläche zu den Bauteilen 2 und 3 im Schnitt gesehen sägezahn- oder zackenförmig ausgebildet, so daß sich eine Labyrinthdichtung ergibt. Zwischen den Anlagezonen 6 und 7 des Dichtungselementes 1 erstreckt sich eine Verformungszone 8, die, wie aus der Figur 1 ersichtlich ist, in ihrem Querschnitt dünner gestaltet ist als die Anlagezonen 6 und 7. Diese Gestaltung in Verbindung mit der bauchigen Form der Verformungszone 8 bewirkt eine hohe Elastizität dieser Zone, so daß in diesem Bereich die Verformung des Dichtungselementes 1 bei Relativbewegungen zwischen Gelenkschaft 3 und Gelenkpfanne 2 stattfindet. Die Anlagezone 6 ist in diesem Ausführungsbeispiel in einer Nut 9 angeordnet, so daß eine axiale Verschiebung in Richtung der Längsachse des Gelenkschaftes 3 ausgeschlossen ist. An der Außenseite der Anlagezone 7 ist ein Sicherungsring 12 außen am Dichtungselement 1 angeordnet, um die Anpreßkräfte innerhalb der Anlagezone 7 an den Gelenkschaft 3 zu erhöhen.

Dem Sicherungsring 12 benachbart befindet sich in der Anlagezone 7 eine Überdruckablaßvorrichtung 14. Diese Überdruckablaßvorrichtung dient dazu, einen innerhalb der durch die Verformungszone 8 definierten Schmiermittelkammer 11 auftretenden Überdruck kontrolliert nach außen abzuleiten.

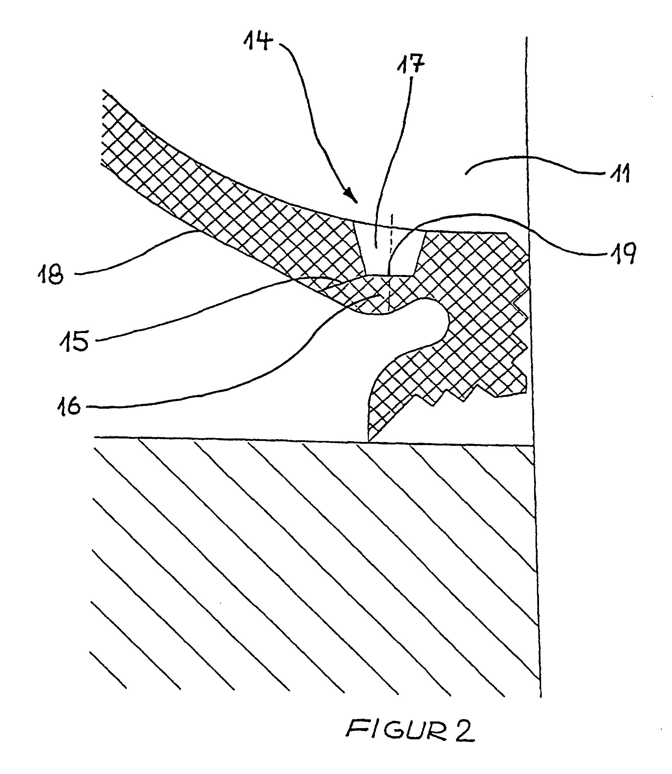

In der Figur 2 ist die Überdruckablaßvorrichtung 14 zur Verdeutlichung in vergrößertem Maßstab dargestellt. In dem dargestellten Ausführungsbeispiel besteht die Überdruckablaßvorrichtung 14 aus einer als Schlitz gestalteten Auslaßöffnung 15, einer Verbindungsbohrung 17, die zur Innenseite des Dichtungselementes, das heißt zur Schmiermittelkammer 11 hin geöffnet ist sowie einem Verschlußelement 16, welches als Dichtungslippe gestaltet ist. Der Schlitz 15, der die Auslaßöffnung bildet, verläuft in schrägem Winkel zur Außenoberfläche 18 des Dichtungselementes und ist umlaufend ausgeführt. Die Dichtungslippe 16, die das Verschlußelement bildet, ist, wie die Figuren 1 und 2 deutlich machen, einstückig an dem Dichtungselement angeformt. Das Dichtungselement besteht aus einem Elastomermaterial, beispielsweise einer Kautschukmischung. Die Anordnung des Schlitzes 15 bewirkt, daß die Eigenelastizität des Elastomermaterials bewirkt, daß der Schlitz 15 durch die Dichtlippe 16 verschlossen wird. Ergeben die Betriebsbedingungen der Gesamtanordnung, daß die Schmiermitteltemperatur und somit der Druck innerhalb der Schmiermittelkammer 11 ansteigt, so führt der Druckanstieg dazu, daß Schmiermittel in die Bohrung 17 eindringt und gegen die Grundfläche 19 der Bohrung drückt. Übersteigt der Überdruck einen gewissen Grenzwert, so wird die Dichtlippe 16 im Bereich der Bohrung 17 nach außen gedrückt, so daß durch den Schlitz 15 Schmiermittel nach außen austreten kann, wodurch der Überdruck innerhalb der Schmiermittelkammer 11 abgebaut wird. Die elastischen Rückstellkräfte der Dichtlippe bewirken nach Abbau des Überdruckes ein selbsttätiges Wiederverschließen des Schlitzes 15, so daß ein Eindringen von Verunreinigungen in die Schmiermittelkammer zuverlässig ausgeschlossen wird. Die Festlegung des sogen. Grenzüberdrucks, d.h. desjenigen Druckes, der zu einem Öffnen des Schlitzes führt, kann es erforderlich machen, auf dem Umfang des Dichtungselementes mehrere Bohrungen 17 konzentrisch anzuordnen.

Eine weitere Variante der erfindungsgemäßen Überdruckablaßvorrichtung kann so gestaltet sein, daß beispielsweise in einem gewissen Teilumfangsbereich des Dichtungselementes 1 die Auslaßöffnung 15 als schräg verlaufender Schlitz gestaltet wird, wobei der Schlitz von der Außenseite des Dichtungselementes 1 bis direkt in die Schmierstoffkammer 11 hineinreicht. Eine Verbindungsbohrung 17 wie in dem oben angeführten Beispiel kann in diesem Falle entfallen. Natürlich ist es auch denkbar, auf dem Umfang des Dichtungselementes 1 mehrere kurze schlitz- oder nutförmige Auslaßöffnungen 15 anzuordnen, um somit bei großem Überdruck diesen entspechend schnell abbauen zu können.

### Bezugszeichenliste

- 1 -: Dichtungselement
- 2 -: Gelenkpfanne
- 3 -: Gelenkschaft
- 4 -: Gelenkkugel
- 6 -: Anlagezone Gelenkpfanne
- 7 -: Anlagezone Gelenkschaft
- 8 -: Verformungszone
- 9 -: Nut
- 10 -: Innenseite Verformungszone
- 11 -: Schmiermittelkammer
- 12 -: Sicherungsring
- 14 -: Überdruckablaßvorrichtung
- 15 -: Auslaßöffnung
- 16 -: Verschlußelement
- 17 -: Bohrung
- 18 -: Außenoberfläche
- 19 -: Grundfläche

## Patentansprüche

1. Elastisches Dichtungselement in Balgform zur Abdichtung der Kontaktfläche zwischen wenigstens zwei zueinander beweglichen Bauteilen, mit niedrig elastischen Anlagezonen (6, 7) an die beweglichen Bauteile (2, 3), einer zwischen den Anlagezonen befindlichen, verglichen mit den Anlagezonen, höherelastischen Verformungszone (8), die an ihrer den beweglichen Bauteilen zugewandten Innenseite eine Kammer zur Aufnahme von Schmiermitteln (11) definiert und einer Überdruckablassvorrichtung (14), wobei die Überdruckablassvorrichtung (14) wenigstens im Bereich einer der niedrigelastischen Anlagezonen (6, 7) angeordnet ist und mindestens eine die Schmiermittelkammer (11) mit der Aussenseite des Dichtungselementes (I) verbindende Auslassöffnung (15) und ein diese Auslassöffnung abdeckendes Verschlusselement (16) aufweist, wobei das Verschlusselement (16) einstückig mit dem Dichtungselement (1) ausgeführt ist und durch die Eigenelastizität des Dichtungselementmaterials die Auslassöffnung (15) bis zu einem Grenzüberdruck in der Schmiermittelkammer (11) verschliesst,
**dadurch gekennzeichnet, dass**
die Auslassöffnung (15) als umlaufender Schlitz gestaltet ist und die Schlitztiefe des umlaufenden Schlitzes im wesentlichen die halbe Wandstärke des Dichtungselementes (1) in dem Bereich, in dem die Überdruckablassvorrichtung (14) angeordnet ist, beträgt und dass die Schmiermittelkammer (11) über mindestens eine Bohrung (17) mit dem Schlitz (15) verbunden ist.

2. Elastisches Dichtungselement nach Anspruch 1,
**dadurch gekennzeichnet, dass**
mehrere Bohrungen (17) auf wenigstens einem konzentrischen Radius angeordnet sind, die die Schmiermittelkammer (11) mit dem Schlitz (15) verbinden.

3. Elastisches Dichtungselement in Balgform zur Abdichtung der Kontaktfläche zwischen wenigstens zwei zueinander beweglichen Bauteilen mit niedrig elastischen Anlagezonen (6, 7) an die beweglichen Bauteile (2, 3), einer zwischen den Anlagezonen befindlichen, verglichen mit den Anlagezonen, höherelastischen Verformungszone (8), die an ihrer den beweglichen Bauteilen zugewandten Innenseite eine Kammer zur Aufnahme von Schmiermitteln (11) definiert und einer Überdruckablassvorrichtung (14), wobei die Überdruckablassvorrichtung (14) wenigstens im Bereich einer der niedrigelastischen Anlagezonen (6, 7) angeordnet ist und mindestens eine die Schmiermittelkammer (11) mit der Aussenseite des Dichtungselementes (1) verbindende Auslassöffnung (15) und ein diese Auslassöffnung abdeckendes Verschlusselement (16) aufweist, wobei das Verschlusselement (16) einstückig mit dem Dichtungselement (1) ausgeführt ist und durch die Eigenelastizität des Dichtungselementmaterials die Auslassöffnung (15) bis zu einem Grenzüberdruck in der Schmiermittelkammer (11) verschliesst,
**dadurch gekennzeichnet, dass**
die Auslassöffnung (15) als Schlitz gestaltet ist, der in einem Teilbereich des Umfangs des Dichtungselementes (1) angeordnet ist und die Schmiermittelkammer (11) direkt mit der Aussenseite des Dichtungselementes (1) verbindet, wobei über den Umfang des Dichtungselementes (1) mehrere Schlitze (15) als Auslassöffnungen angeordnet sind.

## Claims

1. Elastic sealing element in bellows form for sealing the contact surface between at least two parts that are movable in relation to one another, with contact zones (6, 7) of low elasticity resting on the movable parts (2, 3), a deformation zone (8) of higher elasticity compared with the contact zones and located between the contact zones that defines a chamber for holding lubricants (11) on its inside facing the movable parts, and an excess pressure venting device (14), the excess pressure venting device (14) being arranged at least in the area of one of the contact zones (6, 7) of low elasticity and having at least one outlet opening (15) connecting the lubricant chamber (11) to the outside of the sealing element (1) and a closing element (16) covering this outlet opening, the closing element (16) being executed in one piece with the sealing element (1) and closing the outlet opening (15) due to the inherent elasticity of the sealing element material up to a limiting excess pressure in the lubricant chamber (11),
**characterized in that** the outlet opening (15) is formed as a circumferential slit and the slit depth of the circumferential slit amounts essentially to half the wall thickness of the sealing element (1) in the area in which the excess pressure venting device (14) is arranged, and that the lubricant chamber (11) is connected to the slit (15) via at least one hole (17).

2. Elastic sealing element according to claim 1, **characterized in that** several holes (17) are arranged on at least one concentric radius and connect the lubricant chamber (11) to the slit (15).

3. Elastic sealing element in bellows form for sealing the contact surface between at least two parts that are movable in relation to one another, with contact zones (6, 7) of low elasticity resting on the movable parts (2, 3), a deformation zone (8) of higher elasticity compared with the contact zones and located between the contact zones that defines a chamber for holding lubricants (11) on its inside facing the movable parts, and an excess pressure venting device (14), the excess pressure venting device (14) being arranged at least in the area of one of the contact zones (6, 7) of low elasticity and having at least one outlet opening (15) connecting the lubricant chamber (11) to the outside of the sealing element (1) and a closing element (16) covering this outlet opening, the closing element (16) being executed in one piece with the sealing element (1) and closing the outlet opening (15) due to the inherent elasticity of the sealing element material up to a limiting excess pressure in the lubricant chamber (11),
**characterized in that** the outlet opening (15) is formed as a slit, which is arranged in a partial area of the circumference of the sealing element (1) and connects the lubricant chamber (11) directly to the outside of the sealing element (1), several slits (15) being arranged over the circumference of the sealing element (1) as outlet openings.

## Revendications

1. Elément d'étanchéité élastique en forme de soufflet pour étanchéifier la surface de contact entre deux composants mobiles l'un par rapport à l'autre, comportant des zones d'application faiblement élastiques (6, 7) situées sur les composants mobiles (2, 3), une zone de déformation (8) située entre les zones d'application et plus élastique que les zones d'application et qui définit, sur sa face intérieure tournée vers les composants mobiles, une chambre (11) pour loger un milieu lubrifiant, et un dispositif (14) de décompression, dans lequel le dispositif de décompression (14) est disposé au moins au niveau de l'une des zones d'application faiblement élastiques (6, 7), et comporte au moins une ouverture de sortie (15), qui relie la chambre pour le milieu lubrifiant (11) au côté extérieur de l'élément d'étanchéité (1), et un élément de fermeture (16), qui ferme cette ouverture de sortie, et dans lequel l'élément de fermeture (16) est réalisé d'un seul tenant avec l'élément d'étanchéité (1) et, sous l'effet de l'élasticité du matériau de l'élément d'étanchéité, ferme l'ouverture de sortie (15) jusqu'à une surpression limite dans la chambre (11) du milieu lubrifiant,
**caractérisé en ce que**
l'ouverture de sortie (15) est agencée sous la forme d'une fente périphérique et la profondeur de la fente périphérique est égale essentiellement à la moitié de l'épaisseur de paroi de l'élément d'étanchéité (1) dans la région, dans laquelle le dispositif de décompression (14) est disposé, et que la chambre (11) pour le milieu lubrifiant est relié à la fente (15) par l'intermédiaire d'un perçage (17).

2. Elément d'étanchéité élastique selon la revendication 1, **caractérisé en ce que**
plusieurs perçages (17) sont disposés sur au moins un cercle concentrique, ces perçages reliant la chambre (11) pour le milieu lubrifiant à la fente (15).

3. Elément d'étanchéité élastique en forme de soufflet pour étanchéifier la surface de contact entre deux composants mobiles l'un par rapport à l'autre, comportant des zones d'application faiblement élastiques (6, 7) situées sur les composants mobiles (2, 3), une zone de déformation (8) située entre les zones d'application et plus élastique que les zones d'application et qui définit, sur sa face intérieure tournée vers les composants mobiles, une chambre (11) pour loger un milieu lubrifiant, et un dispositif (14) de décompression, dans lequel le dispositif de décompression (14) est disposé au moins au niveau de l'une des zones d'application faiblement élastiques (6, 7), et comporte au moins une ouverture de sortie (15), qui relie la chambre pour le milieu lubrifiant (11) au côté extérieur de l'élément d'étanchéité (1), et un élément de fermeture (16), qui ferme cette ouverture de sortie, et dans lequel l'élément de fermeture (16) est réalisé d'un seul tenant avec l'élément d'étanchéité (1) et, sous l'effet de l'élasticité du matériau de l'élément d'étanchéité, ferme l'ouverture de sortie (15) jusqu'à une surpression limite dans la chambre (11) du milieu lubrifiant,
**caractérisé en ce que**
l'ouverture de sortie (15) est agencée sous la forme d'une fente, qui est disposée dans une partie de la périphérie de l'élément d'étanchéité (1) et relie la chambre (11) du milieu lubrifiant directement au côté extérieur de l'élément d'étanchéité (1), plusieurs fentes (15) étant disposées sous la forme d'ouvertures de sortie sur la périphérie de l'élément d'étanchéité (1).
